Europäisches Patentamt

European Patent Office

Office européen des brevets

(11) Publication number: **0 209 709**
**A2**

## (12) EUROPEAN PATENT APPLICATION

(21) Application number: **86108011.7**

(22) Date of filing: **12.06.86**

(51) Int. Cl.⁴: **G 05 B 19/417**

(30) Priority: **14.06.85 SE 8502961**

(43) Date of publication of application:
**28.01.87 Bulletin 87/5**

(84) Designated Contracting States:
**DE FR GB IT**

(71) Applicant: **ASEA AB**

**S-721 83 Västeras(SE)**

(72) Inventor: **Andersson, Björn**
**Smältverksgatan 163**
**S-724 74 Västeras(SE)**

(72) Inventor: **Fäger, Jan G.**
**Askledargatan 12**
**S-723 48 Västeras(SE)**

(72) Inventor: **Schofield, Monica**
**Hästhovsgatan 9B**
**S-722 27 Västeras(SE)**

(72) Inventor: **Svensson, Tommy**
**Blomstergatan 1A**
**S-722 25 Västeras(SE)**

(72) Inventor: **Wennerberg, Lars-Göran**
**Isblocksvägen 14**
**S-722 31 Västeras(SE)**

(74) Representative: **Boecker, Joachim, Dr.-Ing.**
**Rathenauplatz 2-8**
**D-6000 Frankfurt a.M. 1(DE)**

(54) Robot equipment for carrying out a work operation on an object.

(57) Robot equipment for carrying out a work operation on an object, for example the installation of a part on the object, comprising an industrial robot (5, 10, 11, 12, 13, 14) which supports a work tool (7, 8, 9). The equipment comprises first distance sensors ($G_1$-$G_5$) which are mounted in fixed and known positions in relation to the robot. Each first sensor measures the distance between the sensor and the object and supplies a signal, corresponding to this distance, to a calculating unit (6) which, on the basis of the sensor signals, makes a first, rough determination of the position and orientation of the object in the necessary number of degrees of freedom. Control means are arranged to guide the robot, on the basis of the position of the object thus determined, to predetermined positions (e.g. $P_1$) in relation to the object. In each one of these positions, an accurate position determination, preferably in two degrees of freedom, of a small area of the object is made with the aid of a sensor ($G_6$) mounted on the robot tool. Based on these position determinations, a second, accurate position determination in relation to the robot is made of a part of the object which is relevant to the work operation to be performed.

FIG.5

EP 0 209 709 A2

0209709
21 740 PE

ASEA AB
S-721 83 Västeras/Sweden

Robot equipment for carrying out a work operation on an object

The invention relates to a robot equipment for carrying out a work operation on an object. The work operations for which such equipment can be employed are, for example, assembly, machining by means of a tool arranged on the robot, painting, laying out of glue strands, etc.

When programming an industrial robot, a path in a system of coordinates, which is fixed in relation to the robot, is defined with the aid of a number of points on the path. During automatic running according to the program, the robot hand or a point having a fixed position in relation to the robot hand (e.g. the tip of a tool carried by the robot hand) travels along the defined path. If the position and/or dimensions of the actual object deviate/s from the position and dimensions of the object used during the programming, the work operation will be carried out at a location on the actual object that deviates correspondingly from the correct location. These deviations are often so great in relation to the tolerance requirements that some form of measuring means or transducer is required to ensure that the work operation is carried out at the correct location on the object.

For the above-mentioned purpose, it is known to use different forms of fixed position transducers or sensors, which sense the position of the object in one or several coordinates. Such sensors must generally have a relatively large measuring range, and their accuracy of measurement is therefore often insufficient to satisfy the tolerance requirements set for the work operation. Also, in sensors of this kind, it is often necessary for practical reasons to determine the positions of other points of the object than those points at which the work operation is to be carried out. Unavoidable deviations between different objects with regard to dimensions and orientation will then contribute to the insufficiency of the precision of the work operation.

Further, it is known to use sensors fixedly mounted on the robot hand or an a tool mounted on the hand. Because such a sensor, with the aid of the robot, can be brought close to the object, the measuring range of the sensor can be small and its accuracy can therefore become very high. To ensure that the robot hand, the sensor or the work tool will not collide with the work object, the last part of the movement of the robot in a direction towards the object must be carried out at a low speed. When the values of the possible discrepancies in position and dimensions between different objects are large, the distances which thus have to be traversed at a low speed will be relatively long, and particularly in those cases where measurement shall be performed at a plurality of different points, this known method is unacceptably slow. In the case of many work operations to be performed on a single object, the part which is relevant to an individual work operation - and the position of which is to be sensed - has such a small extension that in the case of major deviations in position of the object, the sensor will completely miss the relevant part unless very time-consuming and complicated scanning operations are executed.

The invention aims at developing a robot equipment of the above-mentioned kind which is capable of making fast and accurate determination of the position of the parts of the object which are relevant to the work operation, and that also in the case of very large deviations in position and/or dimensions of the object.

To achieve this aim the invention suggests a robot equipment according to the introductory part of claim 1, which is characterized by the features of the characterizing part of claim 1.

Further developments of the invention are characterized by the features of the additional claims.

The invention will now be described in greater detail with reference to the accompanying drawings, which refer - by way of example - to the installation of rear windows on a passenger car. The drawings show in

Figure 1 a work station for the installation, seen from above;

Figure 2 the work station, seen from above, and the fixed distance sensors;

Figure 3 the work station, seen from behind, with certain of the fixed distance sensors;

Figure 4 the work station, seen from the side, with certain of the fixed distance sensors;

Figure 5 the distance sensors according to the invention and their connection to the control system of the robot;

Figure 6 an example of how to perform the determination of the position by means of the sensor mounted on the robot hand;

Figure 7 a flow chart of the functioning of the control
equipment of the robot.

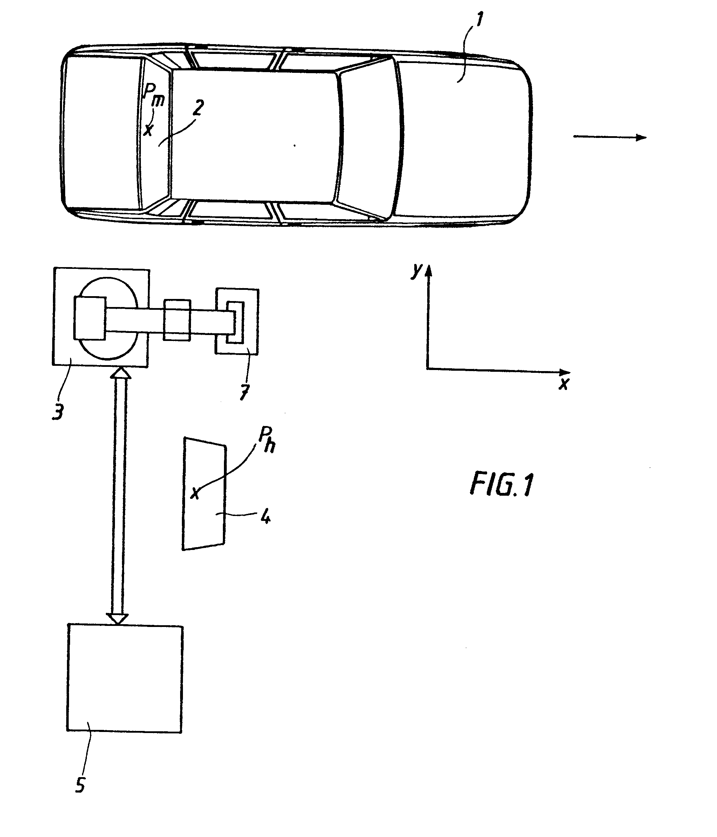

The work object 1 in Figure 1, which is exemplified by a
passenger car body, arrives at a work station on, for example, an assembly line moving in the direction of the arrow.
The windshield 4 for the rear window is to be mounted in the
opening 2 provided for that purpose in the car body. An industrial robot 3 is fixedly positioned in the work station
and has a gripping tool 7 mounted on the robot hand and provided with suction cups. The windshields 4 arrive at the
work station by means of, for example, a second assembly
line. The windshields have been coated in advance with glue
around their edges. On the arrival at the work station, the
position and orientation of the windshields are accurately
fixed by means of a suitable fixture. The control system of
the robot is designated 5. The robot may, for example, be of
the type - IRB 60/2 - which is described in the ASEA Pamphlet CK 09-1102E. The robot is preferably of six-axis design to provide full freedom when adjusting the position and
orientation of the window during installation. When programming the robot, the robot is run, in a known manner, in sequential order to a plurality of points which define the desired path, whereby additional instructions can be stored at
each point, for example concerning activation or deactivation of the gripper 7. During automatic running, the robot
travels along the programmed path and carries out the programmed instructions at the points in question. The control
system is provided in a known manner with means for so-
called adaptive control, which allows a programmed path to
be parallel-displaced in dependence on a signal from a sensor. Further, the control system is provided with a coordinate transformation function according to the principles described in the ASEA Pamphlet CK 09-1405. Upon such a coordinate transformation the position of, for example, three
points of an object can be sensed by means of a sensor and be compared with the programmed positions of the corresponding points. The differences between sensed and the programmed positions define the deviations in position and orientation of the object in relation to that position and that orientation which existed during the programming of the work operation. On the basis of these deviations, that coordinate transformation is calculated which is required for the programmed work operation to be carried out in a correct manner also in relation to an object whose position and orientation deviate from the position and the orientation which were existed during the programming.

Figure 1 also shows the system of coordinates which is used in the following and which is fixed in relation to the base plate of the robot. The z-axis of the system is directed straightly upwards from the paper.

During installation of the windshield, a first determination of the position of the car body is made - in a manner to be described in the following - by means of fixed distance sensors. On the basis of this position determination, a second, more accurate position determination of the windshield opening is made thereafter with the aid of a distance sensor mounted on the robot hand. In the following description, the concept "position" relates to a position determination in one or more degrees of freedom as well as to a determination of orientation (rotation) in one or more degrees of freedom. Thus, a position determination can mean a determination of 1-6 coordinates. As will be clear from the following, the first position determination of the car body is made in five degrees of freedom, which is sufficient in the current application, whereas the position determination of the windshield opening 2 is made in six degrees of freedom.

After the second position determination, the point $P_m$ shown in the Figure 1 is, in principle, known in six coordinates.

This point is determined such that, when the gripping tool with the windshield attached thereto has reached this point, the windshield 4 is in exactly the correct position in the windshield opening. For achieving a defined pressure during the gluing, the point $P_m$ can suitably be determined such that the windshield, at this point, would be somewhat inside the opening 2. The gripping tool is, therefore, designed with a certain amount of resilience in a direction perpendicular to the plane of the window and this resilience provides the desired glue pressure.

After the first and the second position determination, the coordinates for the point $P_m$ are stored. The robot is programmed to proceed, after the position determinations, to a collect position which is indicated by the point $P_h$ in Figure 1. This point is determined such that the suction cups of the gripping tool 7 make contact with the windshield 4 and can collect it. The robot is thereafter guided to the point $P_m$, whereupon the insertion of the windshield is completed, the suction cups are deactivated and the robot resumes an initial position.

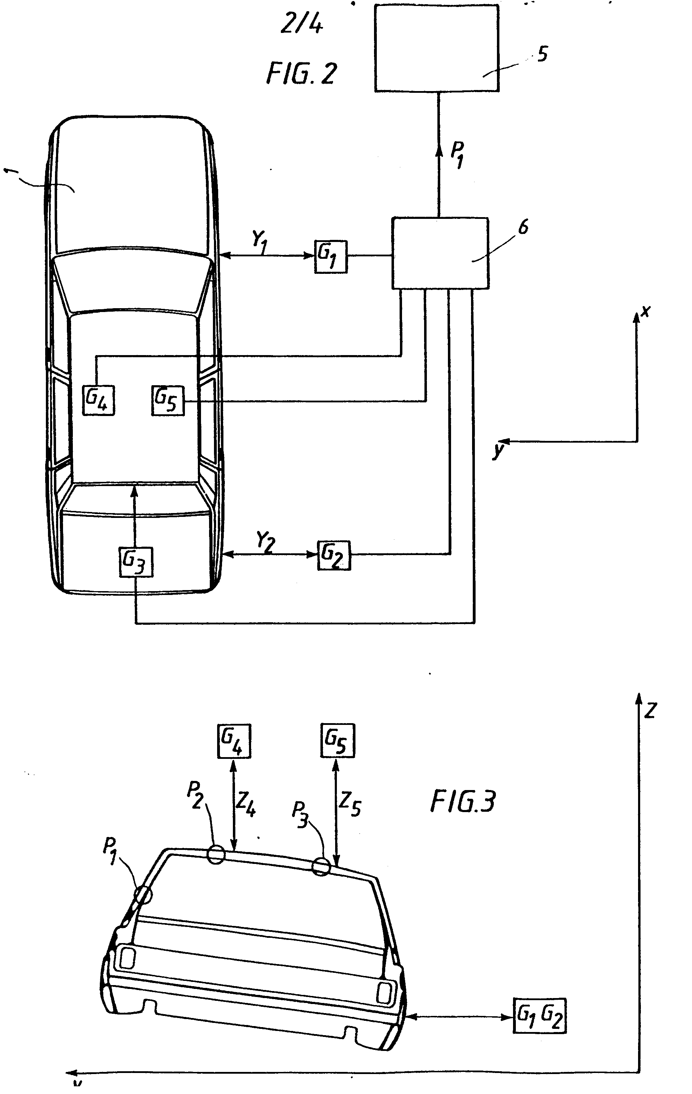

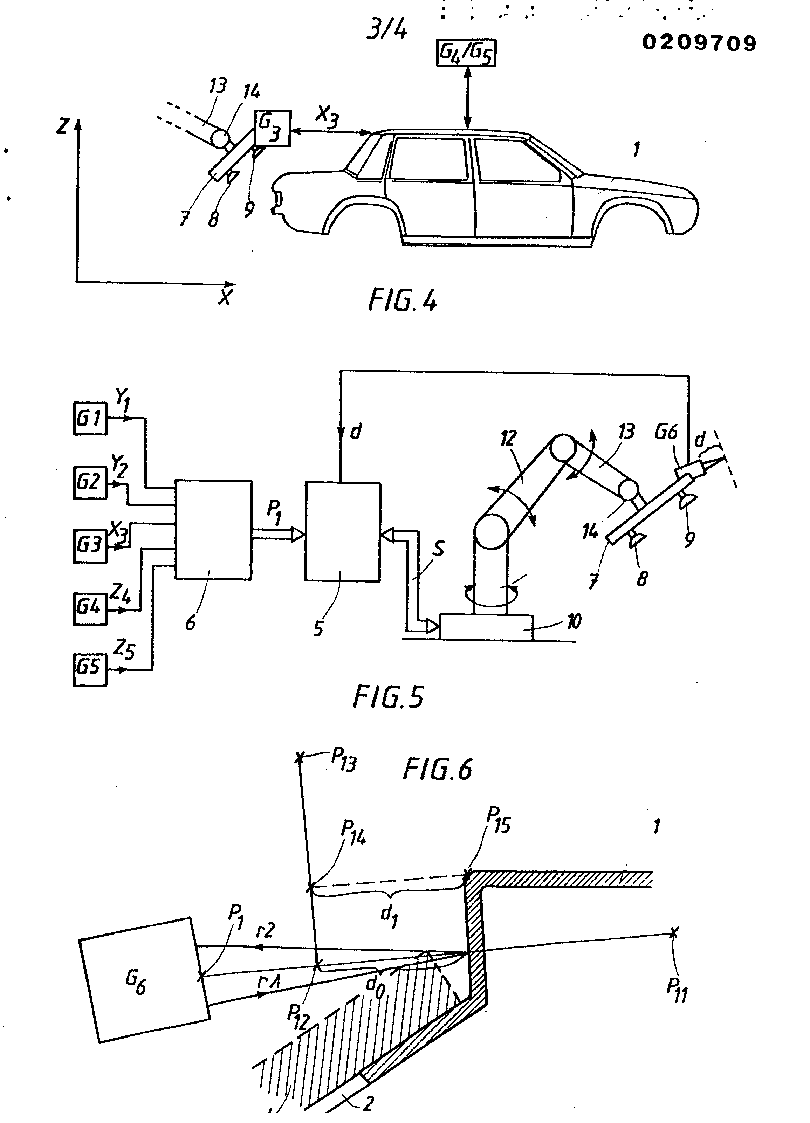

Figure 2 shows the work station seen from above. It also shows the five ultrasonic sensors $G_1$-$G_5$. The sensors $G_1$, $G_2$, $G_4$ and $G_5$ are fixedly mounted on suitable frames or racks. The sensor $G_3$ is mounted on the gripping tool 7, as is shown in more detail in Figure 4. During the first position determination, the robot is programmed to proceed to a fixed position in which the sensor $G_3$ thus is in a known position and is directed in such a way that it measures the distance $x_3$ straight ahead (in the x-direction) towards the rear roof edge of the car body. The ultrasonic sensors may, for example, be of the type produced by Messrs Conrad Ekengren AB, Lidingö, Sweden, under the name of CONMESS.

The sensors $G_1$ and $G_2$ have their sensing directions in the direction of the y-axis whereas the sensors $G_4$ and $G_5$ have their sensing directions in the direction of the z-axis. Figure 3 shows the work station seen in the x-direction and the arrangement of the sensors $G_1$, $G_2$, $G_4$, and $G_5$. Figure 3 further shows the three points $P_1$, $P_2$ and $P_3$, which are used during the second position determination, which will be described below, that is, the accurate determination of the position and orientation of the rear window opening. Figure 4 shows the work station seen in the y-direction and the sensors $G_4$, $G_5$ and $G_3$. As mentioned above, the sensor $G_3$ is mounted on the gripping tool 7 on the robot, which tool, in the above-mentioned fixed measuring position, is oriented such that the sensor measures horizontally straight ahead towards the rear roof edge of the car body. Figure 4 also shows two suction cups 8, 9 of the suction cups arranged on the gripping tool for holding the windshield. The wrist of the robot is designated 14 and its forearm 13.

By arranging double sensors spaced from each other in the y-direction ($G_1$, $G_2$) and the z-direction ($G_4$, $G_5$), the angle of rotation of the car body around the x- and z-axes can be determined. The angular deviation of the car body in the direction around the y-axis is - in the embodiment described - small and can thus be omitted.

Figure 5 shows the five ultrasonic sensors $G_1$-$G_5$, whose output signals $y_1$, $y_2$, $x_3$, $z_4$ and $z_5$ are supplied to a calculating unit 6. This unit can suitably consist of a microcomputer which is programmed in a suitable manner and which - in a manner trivial per se - on the basis of the supplied sensor signals, the coordinates for the known positions of the sensors in the fixed system of coordinates, and the known nominal dimensions of the car body, determines the position of that point $P_1$ (see Figure 3) at which the first part of the accurate determination of the position of the rear window opening shall be made.

The coordinates of the point $P_1$ are supplied as desired value to the control system 5 of the robot, which control system is programmed to move, after the first position determination, to point $P_1$.

The control system 5 is connected via a signal connection S to the various axis servos of the robot. The robot is shown schematically with its bottom plate 10, its turnable column 11, its upper arm 12, its forearm 13 and its wrist 14 holding the gripping tool 7 with its suction cups 8 and 9. Further, the figure shows a distance sensor $G_6$, which is mounted on the gripping tool 7 and which is used for the accurate position determination of the points $P_1$, $P_2$ and $P_3$ in Figure 3. This sensor is of a type operating with so-called optical triangulation and may, for example, be of the type described in the ASEA Pamphlet CK 09-1207S. The sensor determines the distance d to a surface of the object. The output signal from this sensor is supplied to the control system 5 of the robot.

Figure 6 shows schematically how to carry out the position determination at point $P_1$ (see Figure 3). The Figure shows that portion of the car body 1 which is positioned nearest the window opening 2 as well as - in dashed lines - the position of the windshield 4 after installation.

After the first position determination with the aid of the ultrasonic sensors arranged in fixed positions, the robot is programmed to move to such a position that the sensor $G_6$ is located at point $P_1$ and has the orientation shown in the Figure 6. By means of an emitted light beam $r_1$, the sensor illuminates a point on the car body surface, and the light $r_2$ reflected from this point is sensed by the sensor for de-

0209709

21 740 PE

termining the distance d between the sensor and the car body surface. After having reached the point $P_1$, the robot is programmed to move the sensor in a direction towards the point $P_{11}$ until the distance between the sensor and the car body surface has decreased to the value $d_0$, whereupon the movement is stopped. The robot is programmed to move, from this point, in a direction towards the point $P_{13}$ while continuously sensing the distance between the sensor and the car body sheet. In the manner described in the above-mentioned pamphlet, the robot is arranged to sense an abrupt discontinuity in the measured distance. This discontinuity occurs when the sensor has reached the point $P_{14}$ and the measuring point thereby has reached the point $P_{15}$. The position and orientation of the robot tool at point $P_{14}$ are known, as well as the distance $d_1$ sensed at this point, which means that after this measurement the position of the window opening 2 at point $P_1$ is accurately known in two direction substantially perpendicular to each other, namely, $P_1-P_{11}$ and $P_{12}-P_{13}$.

After the measurement at point $P_1$, the robot is programmed to move to and repeat the same measurement process at points $P_2$ and $P_3$ (see Fig. 3). The measurements at these three points provide the necessary basis for the transformation of coordinates mentioned above and described in ASEA Pamphlet CK 09-1405 - which transforms the coordinates for point $P_m$, programmed for a nominal position of the window opening 2, to the coordinates in six degrees of freedom which give the rear window its correct position and orientation for installation in the car body in question.

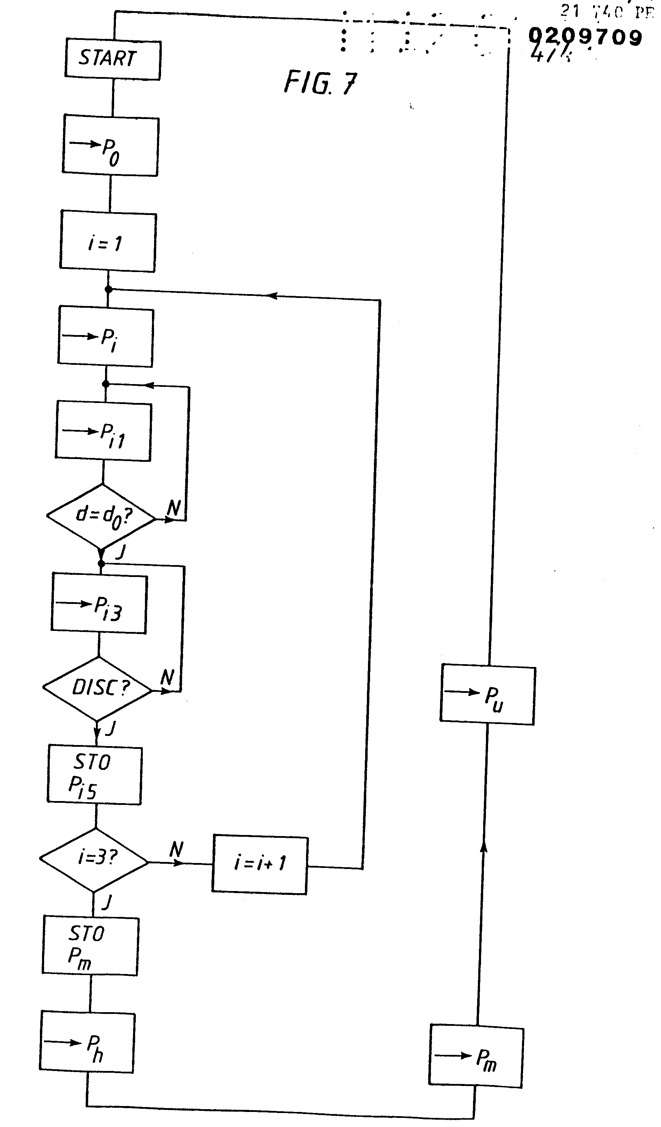

Figure 7 shows, in principle, the flow diagram for the program of the control system of the robot when it carries out the operation described above. The quantity "i" in Figure 7 may assume the value 1, 2 or 3. The program is started when the car body arrives at the work station, suitably with the aid of a sensor (not shown in the figures) which senses the arrival of the car body. The robot first moves to point $P_O$, which point designates the measuring position shown in Figure 4 for determining the position of the car body with the aid of the ultrasonic sensor $G_3$. When the robot has reached this position, the sensors $G_1$-$G_5$ are activated, and the calculating member 6 calculates the coordinates for point $P_1$. In the program, it is set to be equal to 1, and the robot moves to point $P_1$ (see Figure 6) and thereafter towards point $P_{11}$. As long as the distance d is greater than the value $d_O$, the movement towards point $P_{11}$ is continued. When $d = d_O$, the movement is interrupted and the robot starts moving in the programmed direction towards point $P_{13}$. In the manner described above this movement is interrupted at point $P_{14}$, and the position of this point as well as the sensed distance $d_1$ determine the position of point $P_{15}$, which is stored. Thereafter it is sensed whether i = 3. If this is not the case, i = i +1 is set and the robot moves to that one of points $P_2$ and $P_3$ which is nearest in order.

When measurement has been performed at all three measuring points, the coordinates for point $P_m$ can be determined in six degrees of freedom and be stored. Thereafter, the robot is programmed to move to the pick up position $P_h$ shown in Figure 1, where the windshield is gripped, whereupon the robot moves to point $P_m$ and the installation is completed. After deactivation of the gripping tool, the robot moves to an initial position $P_u$ (not shown in the figures) and the installation process is completed.

In the foregoing description only one of a large number of possible embodiments and applications of the robot equipment according to the invention has been described, and a great many other embodiments and applications are possible within the scope of the invention.

Thus, for example, the sensor $G_3$ need not be arranged on the gripping tool but may, for example, be fixedly mounted in the work station if this is feasible without the sensor constituting an obstacle to the movement of the car body. Also, in those cases where the sensor is mounted on the robot, it need not be mounted on the gripping tool 7, as described above, but may, for example, be mounted on the wrist itself or possibly on the forearm 13 of the robot.

The distance sensors described above - ultrasonic sensors for the first position determination and an optical triangulation sensor for the second distance determination - have been found to be very suitable. However, within the scope of the invention, distance sensors of other types may be used as well.

The foregoing description describes equipment according to the invention used only for installation of the windshield into the rear window opening of a passenger car. However, the industrial robot 3 in Figure 3 may suitably be used both for installation of the rear window and - in the case of two-door car bodies - of the right hand rear side window of the car body. In that case, additional industrial robot equipment can suitably be arranged with the robot at the front left hand part of the car body. This robot equipment can then be employed for installation of the windshield and the left hand rear side window of the car.

In the application described above, considerable deviations in position and orientation of the car body may exist when the car body has arrived at the work station, and relatively great dimensional deviations in the car body itself may also occur. For these reasons, the first position determination - described above - is made in five degrees of freedom and the second position determination is made in six degrees of freedom. If the deviations in position, orientation and dimension are smaller than in the case described above - at least in some direction - a sufficient accuracy may possibly be obtained with fewer sensors than those shown above. Similarly, if considered necessary, also the first position determination may be made in six degrees of freedom. The number of measuring points for the second position determination is three in the example described above. In certain applications, it may be sufficient with two measuring points, while in other applications, which are also covered by the scope of the invention, more than three measuring points may be advisable for increasing the accuracy.

CLAIMS

1. Robot equipment for carrying out a work operation on an object (1) comprising an industrial robot (3) and measuring means for determining the position of the object in relation to the robot c h a r a c t e r i z e d in that it comprises

a) first distance sensors $(G_1-G_5)$, arranged to measure, in fixed and known positions in relation to the robot, the distances $(y_1-z_5)$ between the sensors and the object,

b) second distance sensors $(G_6)$, mounted on the robot and arranged to measure the distances between the sensors and the object,

c) calculating members (6) arranged, to make – on the basis of the distances sensed by the first sensors – a first position determination of the object in relation to the robot,

d) control means (5) arranged, to guide – on the basis of position of the object thus determined – the robot to predetermined positions (e.g. $P_1$) in relation to the object,

e) means (5) arranged to determine in these positions, on the basis of the distances sensed by the second distance sensors, the position in relation to the robot of a plurality of points $(P_1, P_2, P_3)$ of the object and, on the basis thereof, to make a second position determination of the object in relation to the robot.

2. Robot equipment according to claim 1, c h a r a c t e r i z e d in that at least one of the first distance sensors $(G_3)$ is mounted on the robot, and that means (6) are ar-

21 740 PE
0209709

ranged to guide the robot to a fixed position for the first position determination.

3. Robot equipment according to claim 1 or 2, c h a r a c- t e r i z e d in that it comprises a plurality of first sensors (e.g. $G_1$, $G_3$, $G_4$) arranged with separate sensing directions for determining the position of the object in at least two coordinates.

4. Robot equipment according to any of the preceding claims, c h a r a c t e r i z e d in that the first sensors comprise one or more sets of two sensors each (e.g. $G_4$, $G_5$) with substantially the same sensing direction (e.g.z) for determining the orientation of the object. .

5. Robot equipment according to any of the preceding claims, c h a r a c t e r i z e d in that the second sensors are arranged to sense the distances to points ($P_1$, $P_2$, $P_3$) adjacent to that portion of the object which is intended for carrying out the work operation.

6. Robot equipment according to any of the preceding claims, c h a r a c t e r i z e d in that it comprises means (6) arranged, on the basis of the position of the object obtained by the second position determination, to guide the robot to that point ($P_m$) at which the work operation is to be carried out.

7. Robot equipment according to any of claims 2 to 6, in which a work tool (7, 8, 9) is carried by the robot, c h a- r a c t e r i z e d in that at least one of the first sensors ($G_3$) is fixedly mounted on the work tool.

8. Robot equipment according to any of the preceding claims, in which a work tool (7, 8, 9) is carried by the robot,

June 4, 1986
21 748 PF
0209709

c h a r a c t e r i z e d  in that at least one of the second sensors ($G_6$) is fixedly mounted on the work tool.

9. Robot equipment according to any of the preceding claims, c h a r a c t e r i z e d  in that it comprises control means (6) arranged to guide the robot, in at least one of said predetermined positions (e.g. $P_1$), in a direction towards the object along a first path ($P_i$-$P_{i3}$) until the distance sensed by one of said second sensors ($G_6$) has decreased to a predetermined value ($d_0$), thereafter to guide the robot along a second path ($P_{i2}$-$P_{i3}$), which makes an angle with said first path, while continuously measuring during the movement along this second path the distance ($P_{i5}$) to the object in order to detect a discontinuity in this distance.

FIG.1

0209709

2/4

FIG.2

FIG.3

0209709

FIG. 4

FIG. 5

FIG. 6

FIG. 7

START

$\longrightarrow P_0$

$i = 1$

$\longrightarrow P_i$

$\longrightarrow P_{i1}$

$d = d_0 ?$  N

J

$\longrightarrow P_{i3}$

DISC?  N

J

STO $P_{i5}$

$i = 3 ?$  N  →  $i = i + 1$

J

STO $P_m$

$\longrightarrow P_h$

$\longrightarrow P_u$

$\longrightarrow P_m$